# EUROPÄISCHE PATENTSCHRIFT

(11) **EP 0 710 664 B1**
(45) Veröffentlichungstag und Bekanntmachung des Hinweises auf die Patenterteilung: **03.05.2000**
(21) Anmeldenummer: 95116336.9
(22) Anmeldetag: 17.10.1995
(51) Int. Cl.: C07F 9/38

(54) **Verfahren zur Herstellung von Alkanphosphonsäureanhydriden**
Process for the preparation of alkanephosphonic acids anhydrides
Procédé de préparation d'anhydrides d'acides alcane phosphoniques

(30) Priorität: 04.11.1994 DE 4439362
(43) Veröffentlichungstag der Anmeldung: 08.05.1996
(73) Patentinhaber: Clariant GmbH, 65929 Frankfurt am Main (DE)
(72) Erfinder: Mollenkopf, Carl Christoph, Dr. Ing., D-60529 Frankfurt (DE); Leupold, Ernst Ingo, Dr., D-61267 Neu-Anspach (DE); Roscher, Guenter, Dr., D-65779 Kelkheim (DE)

(56) Entgegenhaltungen:
- EP-A- 0 004 323
- EP-A- 0 527 442
- EP-A- 0 650 972
- J. POLYM. SCI., POLYM. CHEM. ED. (JPLCAT);67; VOL.5 (1); PP.57-75, MONSANTO CO.;ST. LOUIS; MO., GRANT D ET AL '.alpha.,.omega.-Disubstituted polymethylpolyphosphonates and polyphenylpolyphosphonates from condensation polymerization'

## Beschreibung

Die vorliegende Erfindung betrifft ein Verfahren zur Herstellung von Alkanphosphonsäure-Anhydriden direkt aus den korrespondierenden Säuren unter Wasserabspaltung, ohne daß Kondensationsmittel verwendet werden müssen und ohne daß eine Zwischenstufe, wie z.B. die entsprechenden Alkanphosphonsäuredichloride dafür notwendig sind.

Zur Herstellung von Alkanphosphonsäureanhydriden sind unterschiedliche Methoden bekannt. Im allgemeinen wird dabei von den entsprechenden Alkanphosphonsäuren ausgegangen. Diese können z.B. mit Phosphortrichlorid, Thionylchlorid oder Phosgen in die Alkanphosphonsäuredichloride überführt werden (DE-OS 2225545). Aus den Alkanphosphonsäuredichloriden können dann auf unterschiedlichen Synthesewegen die Alkanphosphonsäureanhydride erhalten werden:

Das Alkanphosphonsäuredichlorid kann entweder mit Alkanphosphonsäure oder auch der stöchiometrischen Menge Wasser zu Alkanphosphonsäureanhydrid umgesetzt werden (EP 154 83), wobei gleichzeitig Chlorwasserstoff entsteht. Eine andere bekannte Methode besteht in der Umanhydridisierung von Alkanphosphonsäure mit z.B. Essigsäureanhydrid (DE-OS 2758580). Hierbei wird aus einem Gemisch von Alkanphosphonsäure und Essigsäureanhydrid nach Rückflußerhitzen die entstehende Essigsäure laufend abdestilliert. Ein weiteres Verfahren besteht in der Umsetzung von Alkanphosphonsäuredichlorid mit der stöchiometrischen Menge Alkanphosphonsäuredimethylester, wobei gleichzeitig Chlormethan entsteht (D. Grant, J. R. Van Wazer, C. H. Dungan, J. Polym. Science, A-15, 1967, 57).
Die direkte Kondensationsreaktion der Alkanphosphonsäure durch einfache Pyrolyse wird in der DE-OS 2811628 beschrieben. Anders als dort beschreibt D. Grant, J. R. Van Wazer, C. H. Dungan (J. Polym. Science A-15, 1967, 57) die thermische Abspaltung von Wasser aus z.B. Methanphosphonsäure durch einfache Thermolyse als nicht durchführbar.

Das Vergleichsbeispiel zeigt in Übereinstimmung mit den Arbeiten von D. Grant, J. R. Van Wazer, C. H. Dungan (J. Polym. Science A-15, 1967, 57), daß eine Pyrolyse, bei der das Kondensationsprodukt Wasser nicht an der Rückreaktion mit bereits gebildetem Anhydrid gehindert wird, nur zu einem sehr ungenügenden Anhydridgehalt führt. Die in der DE-OS 2811628 vorgeschlagene Verfahrensweise stellt, wie auch schon in der DE-OS-4 126 235 dargelegt, daher kein wirtschaftliches Verfahren zur Herstellung der Alkanphosphonsäureanhydride dar.
Andererseits entstehen bei der Verwendung von Alkanphosphonsäuredichloriden jedoch in großen Mengen giftige oder ätzende Gase. Bei der Kondensation müssen zudem große Mengen an wasserentziehenden Hilfsreagenzien, z.B. Essigsäureanhydrid oder Dicyclohexylcarbodiimid (DCC) verwendet werden.

Es bestand daher die Aufgabe, ein Verfahren zu entwickeln, das Alkanphosphonsäureanhydride in hoher Ausbeute und Reinheit liefert, ohne daß dabei giftige oder ätzende Gase entstehen, d.h. unter Umgehung der entsprechenden Alkanphosphonsäuredichloride als Zwischenstufe, sowie unter Vermeidung von Kondensationsmitteln. Zudem mußte eine Möglichkeit gefunden werden, das bei einer thermischen Kondensation der Alkanphosphonsäure gebildete Wasser an der Rückreaktion mit dem bereits gebildeten Alkanphosphonsäureanhydrid zu hindern.

Diese Aufgabe wird gelöst durch ein Verfahren zur Herstellung von Alkanphosphonsäure-Anhydriden der Formel (I) 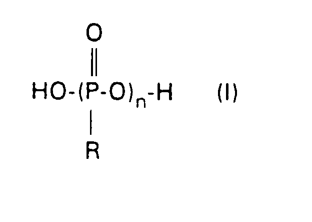 worin R geradkettiges oder verzweigtes unsubstituiertes C₁-C₆-Alkyl und n ≥ 3 bedeuten, dadurch gekennzeichnet, daß man aus einer Alkanphosphonsäure der Formel (II) oder einer Pyro-Alkanphosphonsäure der Formel (III) 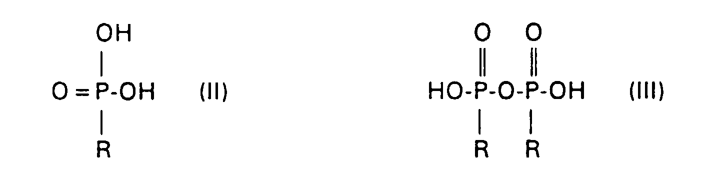 worin R geradkettiges oder verzweigtes C₁-C₆-Alkyl
bedeutet, ohne Lösungsmittelzusatz pyrolytisch Wasser abspaltet und dieses mittels eines Inertgasstroms aus dem Reaktionsgemisch entfernt.

Das Verfahren läßt sich vorteilhaft zur Herstellung von für Methan-, Ethan- und Propanphosphonsäureanhydrid einsetzen; n beträgt hierbei mindestens 3, im allgemeinen liegt der Wert zwischen 3 und 150, insbesondere 5 und 100.

Die Vorteile dieses Verfahrens liegen darin begründet, daß durch den Inertgasstrom das aus der thermischen Kondensation gebildete Wasser aus dem Gleichgewicht vollständig entfernt werden kann und somit die Rückreaktion verhindert wird. Es war überraschend, daß durch eine einfache technische Maßnahme, wie das Durchleiten eines Inertgasstroms, die Ausbeute und Reinheit der Anhydride deutlich erhöht wird (siehe Beispiel 1/Vergleichsbeispiel). Weiterhin erlaubt das erfindungsgemäße Verfahren deutlich tiefere Temperaturen, mit den Vorteilen einer geringeren Korrosion und eines geringeren Energieverbrauchs. Weiterhin enthalten die Produkte deutlich geringere Anteile trübender Zersetzungsprodukte.
Außerdem kann auf Hilfsreagenzien wie z.B. wasserentziehende Mittel (DCC, Essigsäureanhydrid) verzichtet werden.
Zudem kann durch die Umgehung des Alkanphosphonsäuredichlorids als Ausgangsmaterial die Entstehung von ätzenden und giftigen Gasen bei der Synthese des Anhydrids vermieden werden.

Zur Durchführung des Verfahrens wird die Alkanphosphonsäure oder Pyro-Alkanphosphonsäure auf 200 bis 350°C, vorzugsweise 250 bis 300°C, in inerter Atmosphäre erwärmt. Beim Erreichen von 200°C wird das Reaktionsgefäß evakuiert und gleichzeitig ein Inertgasstrom durch die Schmelze geleitet, so daß ein Vakuum von 2 bis 10 mbar, vorzugsweise 3 bis 4 mbar, erreicht wird.

Die Temperatur wird so gewählt, daß sie bei dem gewählten Vakuum 30 bis 70°C, vorzugsweise 40 bis 60°C unter dem entsprechenden Siede- bzw. Sublimationspunkt der Alkanphosphonsäure oder Pyro-Alkanphosphonsäure liegt.

Das bei diesen Temperaturen in einer Kondensationsreaktion entstehende Wasser wird durch den Inertgasstrom aus dem Reaktionsgefäß entfernt und kann in einer zwischengeschalteten Kühlfalle aufgefangen werden.

Die Pyrolysedauer liegt, abhängig von der Alkanphosphonsäure und der eingestellten Temperatur, zwischen 10 und 20 Stunden.

Nach Beendigung der Pyrolyse kann das entstandene Anhydrid direkt aus dem Reaktionsgefäß abdestilliert werden (siehe DE-OS 4126235). Dazu wird die Inertgaseinleitung beendet und das Vakuum und/oder die Temperatur soweit gesteigert, daß das Alkanphosphonsäure-Anhydrid destilliert und so in reiner Form isoliert wird.

Die Bestimmung der Produktreinheit erfolgt durch Umsetzung von Alkanphosphonsäure-Anhydrid mit Wasser zu der entsprechenden Alkanphosphonsäure. Dabei wird pro Mol Alkanphosphonsäure ein Mol Wasser verbraucht. Durch Reaktion einer bekannten Wassermenge mit einer bestimmten Alkanphosphonsäure-Anhydrid Menge (z.B. ein Mol) kann durch Bestimmung des Restwassergehalts (z.B. nach K. Fischer) nach der Reaktion durch Vergleich des tatsächlichen mit dem theoretischen Wasserverbrauch auf den Anhydridgehalt im Produkt geschlossen werden. Durch ³¹P-NMR des Hydrolysats kann weiter überprüft werden, ob die Monomer-Einheiten im Anhydrid tatsächlich ausschließlich aus den entsprechenden Alkanphosphonsäuregruppen aufgebaut waren.

Alkanphosphonsäureanhydride können als Kondensationshilfsmittel oder als Zwischenstufe bei der Herstellung phosphororganischer Produkte eingesetzt werden. Weiterhin können sie zur Herstellung von Mitteln zur Flammhemmung, für die Metallextraktion oder den Korrosionsschutz dienen.

Die folgenden Beispiele sollen die Erfindung erläutern ohne sie darauf zu beschränken.

Vergleichsbeispiel analog DE-OS 2811628:

In einer wie in DE-OS 2811628 beschriebenen Apparatur werden 220 g Methanphosphonsäure vorgelegt und bei einem Druck von 0,1 bis 0,3 mbar auf 300 bis 320°C erhitzt. Schon nach drei Stunden beginnt ein Teil des bereits gebildeten Methanphosphonsäureanhydrids zu destillieren. Da die Wasserabspaltung zu diesem Zeitpunkt nicht vollständig war, bildet sich weiterhin Wasser aus der thermischen Kondensation im Sumpf und reagiert mit dem abdestillierten Methanphosphonsäureanhydrid zur Pyro-Methanphosphonsäure zurück. Das so erhaltene Destillat weist lediglich einen Anhydridgehalt von ca. 60 % auf.

### Beispiel 1:

400 g Methanphosphonsäure werden in einem Rundkolben mit Innenthermometer, Gaseinleitungskapillare und kurzer Destillationsbrücke unter Stickstoffatmosphäre auf 200°C erwärmt. Beim Erreichen von 200°C wird die Apparatur evakuiert und anschließend Stickstoff durch die Schmelze geleitet, so daß ein Vakuum von 3 mbar erhalten wird. Danach wird die Temperatur auf 290°C gesteigert. Nach 10 Stunden Pyrolyse wird die Stickstoffeinleitung beendet. Dadurch verbessert sich das Vakuum auf 0,5 mbar und gleichzeitig beginnt das entstandene Anhydrid zu destillieren (Kopftemperatur 250°C, Sumpftemperatur 300°C, 0,5 mbar). Das Methanphosphonsäureanhydrid wird als farblose Schmelze in der Vorlage aufgefangen. Es hat einen Anhydridgehalt von 90 %. Ausbeute 82 %.

### Beispiel 2:

Analog Beispiel 1 werden 400 g Pyromethanphosphonsäure in 15 Stunden bei 270°C pyrolisiert.
Nach Destillation bei einer Sumpftemperatur von 300°C, 0,5 mbar und einer Kopftemperatur von 250°C erhält man in 86 % Ausbeute das Anhydrid der Methanphosphonsäure mit einem Anhydridgehalt von 92 %.

### Beispiel 3:

In einer analogen Apparatur wie in Beispiel 1 werden 500 g Propanphosphonsäure auf 200°C in einer Argonatmosphäre erwärmt und anschließend evakuiert. Argon wird durch ein Einleitungsrohr mit Frittenboden so durch die Schmelze geleitet, daß ein Vakuum von 4 mbar erhalten wird. Die Temperatur wird dann auf 270°C gesteigert und die Schmelze 18 Stunden pyrolisert. Anschließend kann das Anhydrid der Propanphosphonsäure bei einer Sumpftemperatur von 270°C und 2 mbar destilliert werden. Man erhält ein viskoses Öl in 87 % Ausbeute mit 80 % Anhydridgehalt.

## Patentansprüche

1. Verfahren zur Herstellung von Alkanphosphonsäure-Anhydriden der Formel (I) 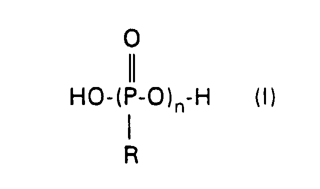 worin R geradkettiges oder verzweigtes unsubstituiertes C₁-C₆-Alkyl und n ≥ 3 bedeuten, dadurch gekennzeichnet, daß man aus einer Alkanphosphonsäure der Formel (II) oder einer Pyro-Alkanphosphonsäure der Formel (III) 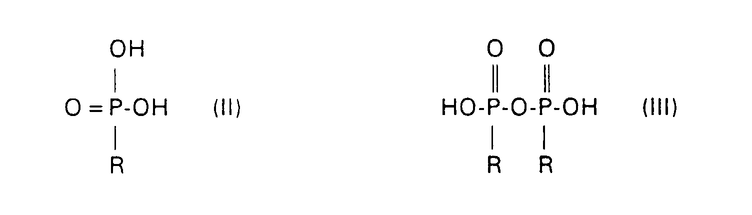 worin R geradkettiges oder verzweigtes C₁-C₆-Alkyl
bedeutet, ohne Lösungsmittelzusatz pyrolytisch Wasser abspaltet und dieses mittels eines Inertgasstroms aus dem Reaktionsgemisch entfernt.

2. Verfahren gemäß Anspruch 1, dadurch gekennzeichnet, daß R für Methyl, Ethyl, Propyl, insbesondere Methyl und n für 3 bis 150, insbesondere 5 bis 100 steht.

3. Verfahren gemäß Anspruch 1, dadurch gekennzeichnet, daß man die Pyrolyse bei einer Temperatur zwischen 220 und 350°C, insbesondere 250 und 300°C vornimmt.

4. Verfahren gemäß Anspruch 1, dadurch gekennzeichnet, daß man bei der Umsetzung einen Inertgasstrom so durch die Schmelze leitet, daß bei gleichzeitigem Evakuieren ein Vakuum zwischen 2 bis 10 mbar, vorzugsweise zwischen 3 bis 4 mbar erhalten wird.

## Claims

1. A process for preparing alkanephosphonic anhydrides of the formula (I) 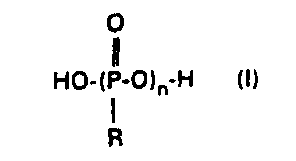 where R is straight-chain or branched unsubstituted C₁-C₆-alkyl and n ≥ 3, which comprises pyrolytically eliminating water from an alkanephosphonic acid of the formula (II) or a pyroalkanephosphonic acid of the formula (III) 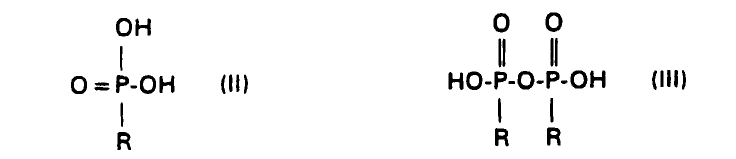 where R is straight-chain or branched C₁-C₆-alkyl, without addition of solvent and removing the water from the reaction mixture by means of an inert gas stream.

2. The process as claimed in claim 1, wherein R is methyl, ethyl, propyl, in particular methyl, and n is from 3 to 150, in particular from 5 to 100.

3. The process as claimed in claim 1, wherein the pyrolysis is carried out at a temperature between 220 and 350°C, in particular 250 and 300°C.

4. The process as claimed in claim 1, wherein an inert gas stream is passed through the melt during the reaction in such a way that with simultaneous evacuation there is obtained a vacuum of from 2 to 10 mbar, preferably from 3 to 4 mbar.

## Revendications

1. Procédé de préparation d'anhydrides d'acides alcanephosphoniques de formule (I) 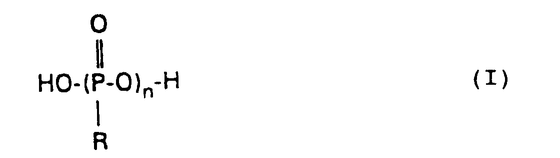 où R représente un groupe alkyle en C₁-C₆ linéaire ou ramifié, non substitué, et n ≥3, caractérisé en ce que l'eau est éliminée à partir d'un acide alcane-phosphonique de formule (II) ou d'un acide pyro-alcanephosphonique de formule (III) 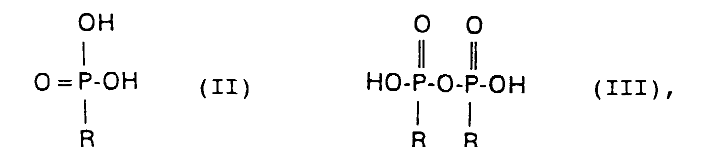 où R représente un groupe alkyle en C₁-C₆ linéaire ou ramifié, par pyrolyse sans ajout de solvant, et à partir du mélange réactionnel, l'eau est éliminée au moyen d'un flux de gaz inerte.

2. Procédé selon la revendication 1, caractérisé en ce que R représente des groupes méthyle, éthyle, propyle, en particulier méthyle, et n va de 3 à 150, en particulier de 5 à 100.

3. Procédé selon la revendication 1, caractérisé en ce qu'on réalise la pyrolyse à une température comprise entre 220 et 350°C, en particulier entre 250 et 300°C.

4. Procédé selon la revendication 1, caractérisé en ce qu'on fait barboter à travers la matière fondue, au cours de la réaction, un flux de gaz inerte, en ce qu'on maintient, en évacuant simultanément, un vide compris entre 2 à 10 mbars, de préférence entre 3 à 4 mbars.
